# EUROPÄISCHE PATENTSCHRIFT

(11) **EP 2 424 744 B1**
(45) Veröffentlichungstag und Bekanntmachung des Hinweises auf die Patenterteilung: **20.06.2018**
(21) Anmeldenummer: 10718947.4
(22) Anmeldetag: 28.04.2010
(51) Int. Cl.: B60K 35/00, G06F 3/048

(54) **VERFAHREN ZUM STEUERN DER INFORMATIONSANZEIGE AUF EINER ANZEIGEFLÄCHE**
METHOD FOR CONTROLLING THE DISPLAY OF INFORMATION ON A DISPLAY SURFACE
PROCÉDÉ POUR COMMANDER L'AFFICHAGE D'INFORMATIONS SUR UNE SURFACE D'AFFICHAGE

(30) Priorität: 30.04.2009 DE 102009019562
(43) Veröffentlichungstag der Anmeldung: 07.03.2012
(73) Patentinhaber: Volkswagen Aktiengesellschaft, 38440 Wolfsburg (DE)
(72) Erfinder: HAUSCHILD, Frank, 10587 Berlin (DE); KUHN, Mathias, 14129 Berlin (DE); DEHMANN, Rainer, 10961 Berlin (DE)
(74) Vertreter: Reitstötter Kinzebach
(86) Internationale Anmeldenummer: PCT/EP2010/055751
(87) Internationale Veröffentlichungsnummer: WO 2010/125120

(56) Entgegenhaltungen:
- WO-A1-98/47063
- WO-A2-2008/134657
- Bhowden: "The Windows File Manager in Windows NT 3.5" wikipedia 30. Oktober 2008 (2008-10-30), XP002597941 Gefunden im Internet: URL:http://en.wikipedia.org/wiki/File:File manager31.gif [gefunden am 2010-08-24]

## Beschreibung

Die vorliegende Erfindung betrifft ein Verfahren zum Steuern der Informationsanzeige auf einer Anzeigefläche, wobei die Informationen hierarchisch in Objekten strukturiert sind. Bei dem Verfahren wird ein Objekt und ein Pfad, der in der hierarchischen Struktur zu dem Objekt führt, angezeigt. Das Verfahren betrifft insbesondere die Steuerung der Informationsanzeige auf einer Anzeigefläche, die in einem Fahrzeug angeordnet ist. Die Informationsanzeige kann ferner eine Bedienvorrichtung für Einrichtungen eines Fahrzeugs unterstützen.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombünstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Damit der Nutzer schnell und intuitiv bestimmte gewünschte Informationen zur Anzeige bringen kann oder schnell und intuitiv die Ausführung bestimmter Funktionen steuern kann, ist es bekannt, die anzuzeigenden Informationen hierarchisch in Objekten zu strukturieren. Dabei können die Objekte in eine Vielzahl von Menüs eingeteilt sein. Diese Menüs sind wiederum hierarchisch strukturiert, so dass man bei der Auswahl eines Objekts einer Hierarchieebene in die nächst tiefere Hierarchieebene gelangt. Um wieder zurück zu einer höheren Hierarchieebene zu gelangen, ist vielfach eine so genannte Rücksprungschaltfläche vorgesehen. Des Weiteren ist es bekannt, die gesamte hierarchische Struktur in Form eines Baumdiagramms anzuzeigen, in dem ein Nutzer navigieren kann.

Die Anzeige eines Baumdiagramms, welches die hierarchische Struktur von Ordner und Dateien zeigt, die im Speicher eines Computers gespeichert sind, ist beispielsweise für das Betriebssystem Windows NT bekannt.

Aus der WO 98/47063 A1 ist eine Informationsanzeige für eine grafische Nutzerschnittstelle bekannt, bei der hierarchisch strukturierte Menüs angezeigt werden.

Schließlich ist aus der WO 2008/134657 A2 ein Informationsmanagementsystem für ein Fahrzeug bekannt.

Es ist die Aufgabe der vorliegenden Erfindung, ein Verfahren der Eingangs genannten Art bereitzustellen, welches den Nutzer unterstützt, schneller und einfacher auf Informationen zuzugreifen, und mit welchem die Bedienung von Einrichtungen, die von der Informationsanzeige unterstützt werden, vereinfacht wird.

Erfindungsgemäß wird diese Aufgabe durch ein Verfahren mit den Merkmalen des Anspruchs 1 gelöst. Vorteilhafte Aus- und Weiterbildungen ergeben sich aus den abhängigen Ansprüchen.

Bei dem erfindungsgemäßen Verfahren ist der Pfad in einzelne Pfadelemente eingeteilt, wobei die Pfadelemente zu unterschiedlichen Hierarchieebenen des zu dem Objekt führenden Pfades gehören und wobei die Pfadelemente auswählbare Schaltflächen sind. Bei einer Auswahl eines Pfadelements springt die Informationsanzeige in die Hierarchieebene des ausgewählten Pfadelements.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Anzeigefläche erfolgen.

Unter einer *hierarchischen Struktur* wird im Sinne der Erfindung verstanden, dass die anzeigbaren Informationen in Objekte eingeteilt sind, die wiederum verschiedenen Hierarchieebenen zugeordnet sind. Wird ein Objekt ausgewählt, gelangt man zu der nächst tieferen Hierarchieebene. Zu einem Objekt kann man somit gelangen, indem man nacheinander Objekte höherer Hierarchieebenen auswählt. Die aufeinander folgende Auswahl von Objekten wird im Sinne der Erfindung als *Pfad* bezeichnet. Eine Hierarchieebene bezieht sich in diesem Fall somit darauf, wann ein übergeordnetes Objekt auf dem Pfad ausgewählt worden ist. Zu einem Objekt kann man ggf. auch auf verschiedenen Pfaden gelangen. Es ist daher möglich, dass ein Objekt verschiedenen Hierarchieebenen zugeordnet sein kann.

Die Objekte sind insbesondere über Kategorien strukturiert. Ein Objekt kann dabei verschiedenen Kategorien und Unterkategorien zugeordnet sein. Durch Auswahl der Kategorien und Unterkategorien über gegebenenfalls mehrere Hierachieebenen kann man auf diese Weise zu einem Objekt gelangen.

Die Objekte können beispielsweise Personen zugeordnet sein, zu denen bestimmte Informationen, wie Telefonnummern und Adressen, gespeichert sind. Die Informationsanzeige kann in diesem Fall ein Navigationssystem oder eine Telefonschnittstelle unterstützen, bei denen die Telefonnummer einer bestimmten Person angewählt oder die Adresse einer bestimmten Person in die Zielführung des Navigationssystems übernommen werden kann. Die Personen können in diesem Fall vom Nutzer in verschiedene Kategorien und Unterkategorien eingeteilt werden. Mittels dieser Kategorisierung kann der Nutzer zu der Anzeige von Informationen zu bestimmten Personen schnell und einfach navigieren.

Des Weiteren können die Objekte Audiodaten zugeordnet sein, die auf an sich bekannte Weise hierarchisch in einer Datenbank strukturiert sind. Beispielsweise kann der Nutzer zu einem Musikstück über ein Musikgenre, einen bestimmten Interpreten und/oder ein bestimmtes Album eines Interpreten gelangen.

Die Anzeige des Pfades, der zu einem angezeigten Objekt führt, gemäß dem erfindungsgemäßen Verfahren erleichtert es dem Nutzer sich in der hierarchischen Struktur zu orientieren. Durch die Einteilung des Pfades in einzelne Pfadelemente, die als auswählbare Schaltflächen ausgestaltet sind, kann der Nutzer sehr schnell zu höheren Hierarchieebenen navigieren. Dabei ist er nicht auf den einfachen Rücksprung zu der nächst höheren Hierarchieebene beschränkt. Er kann vielmehr zu beliebigen Hierarchieebenen des Pfades zurückspringen. Ferner ist die Darstellung der vollständigen hierarchischen Struktur nicht erforderlich. Eine solche Darstellung würde eine sehr große Anzeigefläche in Anspruch nehmen. Dies ist insbesondere dann nachteilig, wenn die Anzeigefläche relativ klein ist.

Gemäß einer bevorzugten Ausgestaltung des erfindungsgemäßen Verfahrens wird nach einer Auswahl eines Objekts zumindest eine Teilmenge der Objekte der nächst tieferen Hierarchieebene angezeigt. Die angezeigte Teilmenge ist dabei dem ausgewählten Objekt zugeordnet. Des Weiteren wird dem angezeigten Pfad ein Pfadelement hinzugefügt, das der Hierarchieebene des ausgewählten Objekts zugeordnet ist. Die Anzahl der angezeigten Pfadelemente, die zu einem angezeigten Objekt angezeigt werden, kann beispielsweise von der Anzahl der Schritte abhängen, über die man zu dem Objekt gelangt ist. Dabei werden insbesondere nur Schritte berücksichtigt, die zu einer tieferen Hierarchieebene führen. Der bei dem erfindungsgemäßen Verfahren angezeigte Pfad gibt somit die Historie wieder, die zu dem angezeigten Objekt geführt hat. Je nachdem, wie die Objekte hierarchisch strukturiert sind, ist es möglich, dass man zu einem Objekt über verschiedene Pfade gelangen kann. In diesem Fall ist der angezeigte Pfad der Pfad, über den der Nutzer tatsächlich zu dem Objekt gelangt ist. Ist ein Objekt nur einer bestimmten Hierarchieebene zugeordnet, hängt die Anzahl der angezeigten Pfadelemente von der Tiefe der Hierarchieebene des angezeigten Objekts ab.

Gemäß einer Ausbildung des erfindungsgemäßen Verfahrens wird nach einer Auswahl eines Pfadelements, zumindest eine Teilmenge der Objekte in der Hierarchieebene angezeigt, die dem ausgewählten Pfadelement zugeordnet ist. Ist ein Objekt Teil eines Menüs, gelangt man nach der Auswahl des Pfadelements zu dem Menü zurück, welches das Objekt enthält, welchem das ausgewählte Pfadelement zugeordnet ist.

Gemäß einer weiteren Ausbildung des erfindungsgemäßen Verfahrens, wird eine Teilmenge mit Objekten einer x-ten Hierarchieebene angezeigt. Daraufhin wird ein erstes Objekt der x-ten Hierarchieebene ausgewählt. Beispielsweise kann dieses Objekt Teil eines Menüs sein. Daraufhin wird zumindest eine Teilmenge der Objekte der nächst tieferen (x + 1)-ten Hierarchieebene angezeigt, wobei die angezeigten Objekte dem ausgewählten ersten Objekt zugeordnet sind. Die Objekte der (x + 1)-ten Hierarchieebene können beispielsweise zu einem Untermenü des Menüs des ersten Objekts gehören. Ferner wird dem angezeigten Pfad ein n-tes Pfadelement hinzugefügt, das der x-ten Hierarchieebene zugeordnet ist. Optional können daraufhin Navigationen in noch tieferen Hierarchieebenen ausgeführt werden. Wenn bei einem Schritt das n-te Pfadelement ausgewählt wird, wird die Teilmenge mit Objekten der x-ten Hierarchieebene angezeigt, wobei das erste, zuvor ausgewählte Objekt markiert angezeigt wird. Wenn der Nutzer somit mittels der Pfadelemente zu einer höheren Hierarchieebene zurückspringt, wird das Objekt markiert dargestellt, dessen Auswahl zuvor dazu geführt hat, dass das n-te Pfadelement hinzugefügt wurde. Diese Markierung erleichtert es den Nutzer weiter, sich in der hierarchischen Struktur zu orientieren und sich an vorhergehende Auswahlvorgänge zu erinnern.

Bei dem erfindungsgemäßen Verfahren werden die einzelnen Pfadelemente nebeneinander auf einem Balken angezeigt. Dieser Balken kann auch als Statusbalken bezeichnet werden. Er gibt an, wie der Nutzer zu dem angezeigten Objekt navigiert ist und wie das angezeigte Objekt innerhalb der hierarchischen Struktur angeordnet ist.

In den Pfadelementen werden bevorzugt jeweils graphische Symbole zur Visualisierung der Hierarchieebene des Pfadelements angezeigt.

Die Erfindung wird nun anhand eines Ausführungsbeispiels mit Bezug zu den Zeichnungen erläutert.
- Figur 1: zeigt schematisch den Aufbau eines ersten Ausführungsbeispiels einer Vorrichtung zur Durchführung des erfindungsgemäßen Verfahrens und die Kopplung dieser Vorrichtung mit anderen Einrichtungen des Fahrzeugs und
- und die Figuren 2 bis 11: zeigen Informationsanzeigen auf einer Anzeigefläche, die von einem Ausführungsbeispiel eines erfindungsgemäßen Verfahrens erzeugt werden.

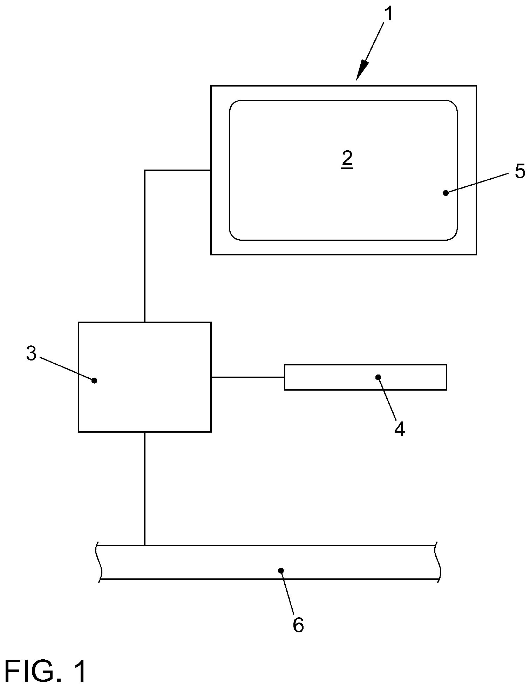

Mit Bezug zu Fig. 1 wird zunächst eine Vorrichtung beschrieben, mit welcher das erfindungsgemäße Verfahren durchgeführt werden kann. Die Vorrichtung ist in einem Fahrzeug, insbesondere einem Kraftfahrzeug untergebracht und kann dort den Fahrzeuginsassen Informationen anzeigen und die Bedienung von Einrichtungen des Fahrzeugs unterstützen.

Die Vorrichtung umfasst eine Anzeigevorrichtung 1 mit einer Anzeigefläche 2, die so im Innenraum des Fahrzeugs angeordnet ist, dass sie von zumindest einem Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden. Die Anzeigevorrichtung ist mit einer Steuervorrichtung 3 gekoppelt.

Die Steuervorrichtung 3 erzeugt Grafikdaten, die mittels der Anzeigevorrichtung 1 angezeigt werden können. Die Steuervorrichtung 3 ist hierfür mit einem Speicher 4 zum Speichern von Daten verbunden. Die Daten werden anhand von Objekten graphisch angezeigt. Die Objekte sind hierarchisch strukturiert, wie es später im Detail erläutert wird.

Die Steuervorrichtung 3 kann ferner über einen Fahrzeugbus 6 mit Einrichtungen des Fahrzeugs verbunden sein. Beispielsweise kann die Steuervorrichtung 3 mit einem Navigationssystem oder einer Musikanlage gekoppelt sein. Um diese Einrichtungen zu steuern, ist die Steuervorrichtung 3 mit einer Bedieneinrichtung gekoppelt. Bei der Bedieneinrichtung kann es sich beispielsweise um eine berührungsempfindliche Oberfläche 5 der Anzeigefläche 2 handeln. Die Anzeigevorrichtung 1 umfasst in diesem Fall somit einen so genannten Touchscreen. Die Bedieneinrichtung könnte jedoch auch anders ausgebildet sein. Beispielsweise könnte ein von der Anzeigefläche 2 abgesetztes mechanisches Bedienelement vorgesehen sein.

Durch die von der Steuervorrichtung 3 erzeugte Informationsanzeige auf der Anzeigefläche 2 kann insbesondere ein mittels der Bedieneinrichtung ausgeführter Bedienvorgang unterstützt werden. Hierfür zeigt die Steuervorrichtung 3 Schaltflächen an, die mittels der Bedieneinrichtung ausgewählt werden können. Die Auswahl einer Schaltfläche kann durch Berührung der berührungsempfindlichen Oberfläche 5 der Anzeigefläche 2 erfolgen. Ist die Bedieneinrichtung als abgesetztes Bedienelement ausgebildet, kann die Auswahl mittels einer Cursorsteuerung in Verbindung mit einer Auswahltaste hervorgerufen werden. Die Auswahl einer Schaltfläche wird von der Steuervorrichtung 3 erfasst, woraufhin die Steuervorrichtung 3 eine der Schaltfläche zugeordnete Funktion ausführt. Diese Funktion kann zum einen eine Steuerung einer Einrichtung eines Fahrzeugs betreffen, wie z. B. die Übernahme eines bestimmten Ziels in das Navigationssystem oder das Abspielen eines bestimmten Musikstücks. Zum anderen kann die Auswahl einer Schaltfläche eine Veränderung der Informationsanzeige hervorrufen.

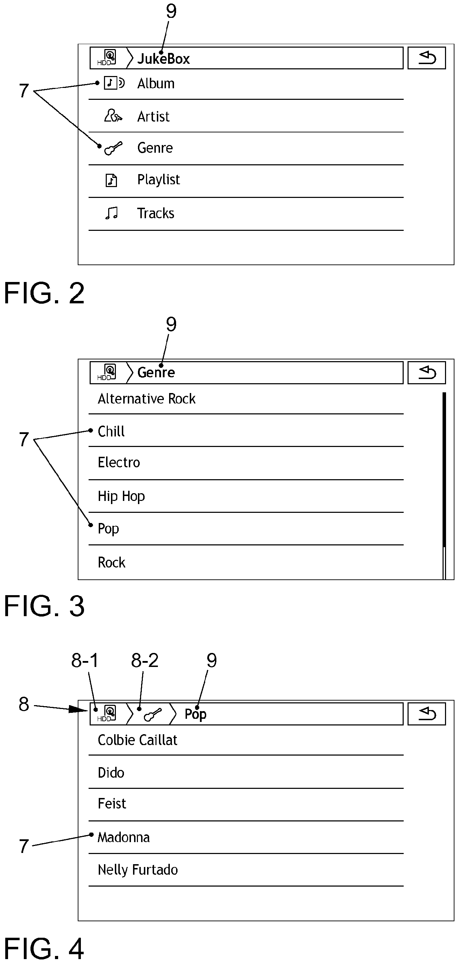

Im Folgenden wird mit Bezug zu den Fig. 2 bis 11 erläutert, wie die Informationsanzeige auf der Anzeigefläche 2 von der Steuervorrichtung 3 gesteuert wird. Als Beispiel ist die Navigation in einer Musikdatenbank, die in dem Speicher 4 gespeichert ist, gewählt. Entsprechende Informationsanzeigen können jedoch auch für beliebig andere hierarchisch strukturierte Objekte mittels des erfindungsgemäßen Verfahrens erzeugt werden.

Die Musikstücke der Musikdatenbank sind auf an sich bekannte Weise in verschiedene Kategorien eingeteilt. Ein Musikstück gehört beispielsweise zu einem bestimmten Album eines bestimmten Künstlers. Ferner kann das Musikstück einen bestimmten Genre und einer bestimmten Abspielliste zugeordnet sein. Die einzelnen Kategorien sind untereinander hierarchisch strukturiert. Einem Genre sind beispielsweise verschiedene Künstler zugeordnet. Den Künstlern sind wiederum verschiedene Alben zugeordnet, die wiederum verschiedene Musikstücke enthalten.

In Fig. 2 ist die Informationsanzeige des Hauptmenüs für die Musikdatenbank wiedergegeben. Das Anzeigeelement 9 zeigt an, dass man sich in der Musikdatenbank befindet. Ferner werden die Objekte 7 ("Album", "Artist", "Genre", "Playlist", "Tracks") als auswählbare Schaltflächen angezeigt. Über die Auswahl der Objekte 7 kann der Nutzer auf verschiedenen Pfaden zu einem gewünschten Musikstück gelangen. Wählt der Nutzer beispielsweise die Schaltfläche des Objekts 7 "Genre" aus, gelangt er zu der in Fig. 3 gezeigten Informationsanzeige.

Bei der in Fig. 3 gezeigten Informationsanzeige werden die zu dem Objekt "Genre" gehörigen Objekte 7 der nächst tieferen Hierarchieebene angezeigt. Die Objekte 7 sind in diesem Fall wieder auswählbare Schaltflächen. In dem Anzeigeelement 9 wird nun dargestellt, dass die Objekte 7 zu dem übergeordneten Objekt "Genre" gehören. Wählt der Nutzer nun das Objekt 7 "Pop" aus, gelangt er zu der in Fig. 4 gezeigten Informationsanzeige.

In Fig. 4 ist die Informationsanzeige für die nächst tiefere Hierarchieebene gezeigt. Es werden erneut Objekte 7 als auswählbare Schaltflächen angezeigt. Die Objekte 7 betreffen in diesem Fall die Künstler, welche dem Genre "Pop" zugeordnet sind. Dieses übergeordnete Objekt "Pop" wird in dem Anzeigeelement 9 dargestellt. Neben dem Anzeigeelement 9 befindet sich ein Balken, welcher den Pfad 8 wiedergibt, über welchen der Nutzer zu der in Fig. 4 gezeigten Informationsanzeige gelangt ist. Der Pfad 8 ist dabei in einzelne Pfadelemente 8-1 und 8-2 eingeteilt. Die Pfadelemente 8-1, 8-2 gehören zu unterschiedlichen Hierarchieebenen des zu dem angezeigten Objekt 7 bzw. den angezeigten Objekten 7 führenden Pfades 8. Das Pfadelement 8-1 betrifft die höchste Hierarchieebene, nämlich die Musikdatenbank. Der Bezug zu der Musikdatenbank wird über ein Symbol hergestellt, welches innerhalb des Pfadelements 8-1 dargestellt wird. Das zweite Pfadelement 8-2 betrifft die nächst tiefere Hierarchieebene, nämlich das "Genre". Auch diese Hierarchieebene wird ein durch ein Symbol innerhalb des Pfadelements 8-2 visualisiert. Die Pfadelemente 8-1, 8-2 zeichnen sich bei dem erfindungsgemäßen Verfahren dadurch aus, dass sie als auswählbare Schaltflächen ausgebildet sind. Bei der Auswahl eines Pfadelements 8-1, 8-2 springt die Informationsanzeige in die Hierarchieebene, welche dem ausgewählten Pfadelement 8-1, 8-2 zugeordnet ist, wie es später erläutert wird.

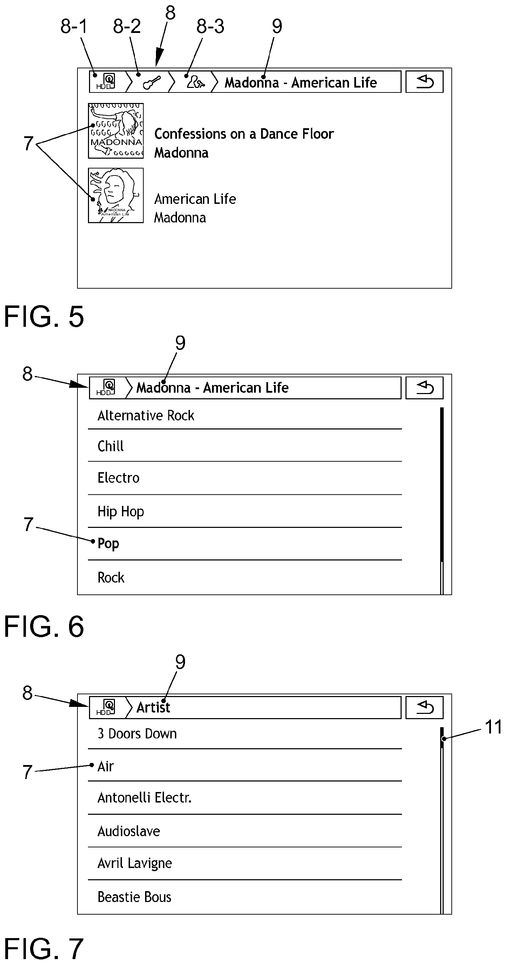

Wählt der Nutzer ausgehend von der Informationsanzeige, wie sie in Fig. 4 dargestellt ist, das Objekt 7 "Madonna" aus, gelangt er zu der in Fig. 5 gezeigten Informationsanzeige. In diesem Fall werden die in dem Speicher 4 gespeicherten Alben der Künstlerin "Madonna" als Objekte 7 der nächst tieferen Hierarchieebene angezeigt. Ferner wird in dem Balken dem Pfad 8 das Pfadelement 8-3 hinzugefügt, welches der Hierarchieebene des ausgewählten Objekts 7 "Artist" zugeordnet ist. Ferner zeigt das Anzeigeelement 9 ein bestimmtes Album der Künstlerin "Madonna" an.

Der Balken zeigt nun als Pfad 8 die Historie an, wie der Nutzer zu den Alben der Künstlerin "Madonna" gelangt ist, nämlich ausgehend von der Musikdatenbank, welche durch das Pfadelement 8-1 repräsentiert wird, über das Genre, welches über das Pfadelement 8-2 repräsentiert wird, zu der Auswahl des Künstlers, der über das Pfadelement 8-3 repräsentiert wird. Durch Auswahl eines der Pfadelemente 8-1 bis 8-3 kann der Nutzer in eine Hierarchieebene springen, welche dem jeweiligen Pfadelement 8-1 bis 8-3 zugeordnet ist.

Wählt der Nutzer beispielsweise das Pfadelement 8-2 aus, gelangt er zurück in die Hierarchieebene des Objekts "Genre", wie es in Fig. 6 dargestellt ist. Hierbei ist zu beachten, dass das Objekt 7 "Pop" gegenüber den anderen Objekten hervorgehoben, d. h. markiert, dargestellt ist. Hierdurch wird angezeigt, dass dieses Objekt 7 zuletzt ausgewählt worden ist. Ferner wird in dem Anzeigeelement 9 nicht mehr, wie bei der in Fig. 3 gezeigten Informationsanzeige, das übergeordnete Objekt angezeigt, sondern die letzte Markierung der letzten Informationsanzeige einer tieferen Hierarchieebene, nämlich in dem in Fig. 6 gezeigten Pfad 8 ein bestimmtes Album der Künstlerin Madonna.

Zu einem bestimmten Album bzw. Musikstück eines Künstlers, kann man ausgehend von der Informationsanzeige, wie sie in Fig. 2 gezeigt ist, auch über einen anderen Pfad 8 gelangen. Beispielsweise kann ausgehend von der Informationsdarstellung der Fig. 2 das Objekt 7 "Artist" ausgewählt werden. Man gelangt daraufhin zu der Informationsanzeige, wie sie in Fig. 7 wiedergegeben ist. Im Anzeigeelement 9 wird die letzte Auswahl des Objekts 7 "Artist" angezeigt. Als Objekte 7 der nächst tieferen Hierarchieebene werden die verschiedenen Künstler angezeigt. Da die Liste der Künstler nicht vollständig auf der Anzeigefläche 2 wiedergegeben werden kann, wird eine Teilmenge der Gesamtliste angezeigt. Mittels der Bedieneinrichtung kann man einen Bildlauf (Scrollen) innerhalb der Liste erzeugen. Wo man sich innerhalb der Liste befindet, wird durch ein Anzeigeelement, das eine Leiste 11 darstellt.

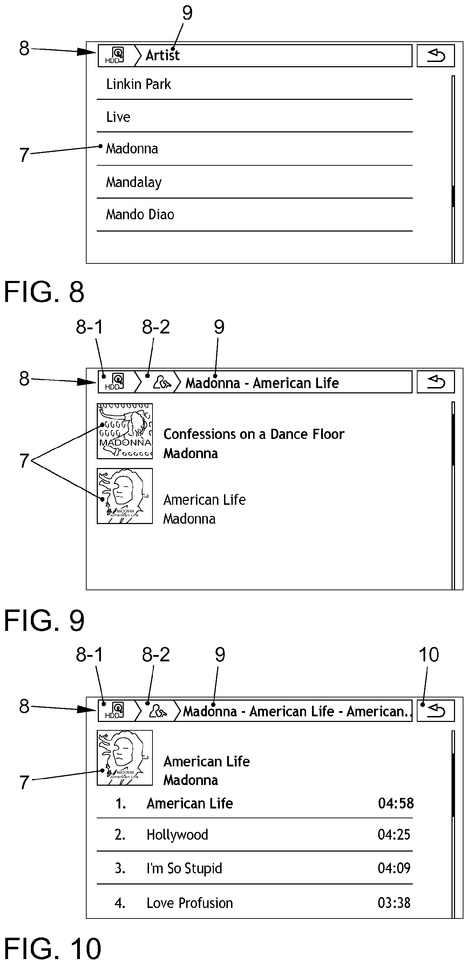

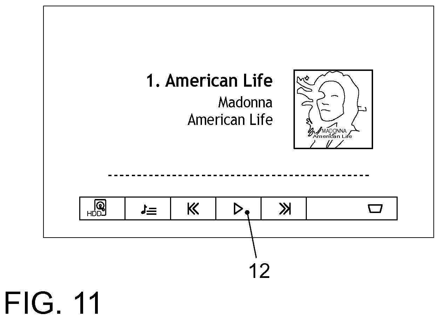

Der Nutzer kann somit einen Bildlauf nach unten erzeugen, bis die in Fig. 8 wiedergegebene Informationsanzeige dargestellt wird, bei welcher das Objekt 7 für die Künstlerin "Madonna" angezeigt wird. Wählt der Nutzer dieses Objekt 7 aus, gelangt er zu der Informationsanzeige, wie sie in Fig. 9 dargestellt ist. Es werden wie bei der in Fig. 5 wiedergegebenen Informationsanzeige die zwei in dem Speicher 4 gespeicherten Alben der Künstlerin "Madonna" als Objekte 7 angezeigt. Da in diesem Fall der Nutzer jedoch auf einem anderen Pfad 8 zu dieser Informationsanzeige gelangt ist, werden auch andere Pfadelemente 8-1 und 8-2 angezeigt, nämlich das Pfadelement 8-1 für die Musikdatenbank und das Pfadelement 8-2 für die Hierarchieebene des Objekts "Artist". Durch eine Auswahl eines der Pfadelemente 8-1 bzw. 8-2 kann der Nutzer wieder zurück zu vorherigen Informationsanzeigen gelangen. Ferner kann der Nutzer ein Objekt 7, z. B. das Album "American Life", auswählen. In diesem Fall bleibt die Anzeige des Objekts 7 bestehen. Unter dem Objekt 7 werden jedoch als auswählbare Schaltflächen die einzelnen Lieder dieses Albums angezeigt. Ein markiertes Lied wird ferner in das Anzeigeelement 9 aufgenommen. Ferner wird eine Schaltfläche 10 angezeigt. Wählt der Nutzer die Schaltfläche 10 aus, gelangt er zu der in Fig. 11 wiedergegebenen Informationsanzeige. Bei dieser Informationsanzeige wird unter anderem eine Schaltfläche 12 dargestellt, mit welcher der Nutzer die Musikanlage des Fahrzeugs so ansteuern kann, dass das ausgewählte Lied abgespielt wird.

### BEZUGSZEICHENLISTE

- 1: Anzeigevorrichtung
- 2: Anzeigefläche
- 3: Steuervorrichtung
- 4: Speicher
- 5: berührungsempfindliche Oberfläche
- 6: Fahrzeugbus
- 7: Objekte
- 8: Pfad
- 8-1, 8-2, 8-3: Pfadelemente
- 9: Anzeigeelement
- 10: Schaltfläche
- 11: Leiste
- 12: Schaltfläche

## Patentansprüche

1. Verfahren zum Steuern der Informationsanzeige auf einer Anzeigefläche (5), wobei die Informationen hierarchisch in Objekten (7) strukturiert sind, bei dem
- ein Objekt (7) und
- ein Pfad (8), der in der hierarchischen Struktur zu dem Objekt (7) führt, angezeigt wird, wobei der Pfad (8) in einzelne Pfadelemente (8-1, 8-2, 8-3) eingeteilt ist, wobei die Pfadelemente (8-1, 8-2, 8-3) zu unterschiedlichen Hierarchieebenen des zu dem Objekt (7) führenden Pfades (8) gehören,
**dadurch gekennzeichnet, dass**
- die Pfadelemente (8-1, 8-2, 8-3) auswählbare Schaltflächen sind,
- bei einer Auswahl eines Pfadelements (8-1, 8-2, 8-3) die Informationsanzeige in die Hierarchieebene des ausgewählten Pfadelements (8-1, 8-2, 8-3) springt und
- die einzelnen Pfadelemente (8-1, 8-2, 8-3) nebeneinander auf einem Balken angezeigt werden.

2. Verfahren nach Anspruch 1,
**dadurch gekennzeichnet,**
**dass** nach einer Auswahl eines Objekts (7) zumindest eine Teilmenge der Objekte (7) der nächst tieferen Hierarchieebene angezeigt wird, die dem ausgewählten Objekt (7) zugeordnet sind, und dem angezeigten Pfad (8) ein Pfadelement (8-1, 8-2, 8-3) hinzugefügt wird, das der Hierarchieebene des ausgewählten Objekts (7) zugeordnet ist.

3. Verfahren nach Anspruch 1 oder 2,
**dadurch gekennzeichnet,**
**dass** die Anzahl der angezeigten Pfadelemente (8-1, 8-2, 8-3), die zu dem angezeigten Objekt (7) angezeigt werden, von der Anzahl der Schritte abhängt, über die man zu dem Objekt (7) gelangt ist.

4. Verfahren nach Anspruch 1 oder 2,
**dadurch gekennzeichnet,**
**dass** die Anzahl der angezeigten Pfadelemente (8-1, 8-2, 8-3) von der Tiefe der Hierarchieebene des angezeigten Objekts (7) abhängt.

5. Verfahren nach einem der vorhergehenden Ansprüche,
**dadurch gekennzeichnet,**
**dass** nach einer Auswahl eines Pfadelements (8-1, 8-2, 8-3) zumindest eine Teilmenge der Objekte (7) in der Hierarchieebene angezeigt wird, die dem ausgewählten Pfadelement (8-1, 8-2, 8-3) zugeordnet ist.

6. Verfahren nach einem der vorhergehenden Ansprüche,
**dadurch gekennzeichnet, dass**
- eine Teilmenge mit Objekten (7) einer x-ten Hierarchieebene angezeigt wird,
- daraufhin ein erstes Objekt (7) der x-ten Hierarchieebene ausgewählt wird,
- daraufhin zumindest eine Teilmenge der Objekte (7) der nächst tieferen, (x + 1)-ten Hierarchieebene angezeigt wird, wobei die angezeigten Objekte (7) dem ausgewählten ersten Objekt (7) zugeordnet sind und dem angezeigten Pfad (8) ein n-tes Pfadelement (8-3) hinzugefügt wird, welches der x-ten Hierarchieebene zugeordnet ist,
- wenn das n-te Pfadelement (8-3) ausgewählt wird, die Teilmenge mit Objekten (7) der x-ten Hierarchieebene angezeigt wird, wobei das erste, zuvor ausgewählte Objekt (7) markiert angezeigt wird.

7. Verfahren nach einem der vorhergehenden Ansprüche,
**dadurch gekennzeichnet,**
**dass** in den Pfadelementen (8-1, 8-2, 8-3) jeweils graphische Symbole zur Visualisierung der Hierarchieebene des Pfadelements (8-1, 8-2, 8-3) angezeigt werden.

## Claims

1. Method for controlling the display of information on a display surface (5), wherein the information is hierarchically structured in objects (7), in which
- an object (7) and
- a path (8) which leads to the object (7) in the hierarchical structure are displayed, wherein the path (8) is divided into individual path elements (8-1, 8-2, 8-3), wherein the path elements (8-1, 8-2, 8-3) belong to different hierarchical levels of the path (8) leading to the object (7),
**characterized in that**
- the path elements (8-1, 8-2, 8-3) are selectable buttons,
- when a path element (8-1, 8-2, 8-3) is selected, the display of information jumps into the hierarchical level of the selected path element (8-1, 8-2, 8-3), and
- the individual path elements (8-1, 8-2, 8-3) are displayed beside one another on a bar.

2. Method according to Claim 1,
**characterized**
**in that**, after an object (7) has been selected, at least one subset of the objects (7) of the next lower hierarchical level which are associated with the selected object (7) is displayed, and a path element (8-1, 8-2, 8-3) which is associated with the hierarchical level of the selected object (7) is added to the displayed path (8).

3. Method according to Claim 1 or 2,
**characterized**
**in that** the number of displayed path elements (8-1, 8-2, 8-3) displayed for the displayed object (7) depends on the number of steps used to reach the object (7).

4. Method according to Claim 1 or 2,
**characterized**
**in that** the number of displayed path elements (8-1, 8-2, 8-3) depends on the depth of the hierarchical level of the displayed object (7).

5. Method according to one of the preceding claims, **characterized**
**in that**, after a path element (8-1, 8-2, 8-3) has been selected, at least one subset of the objects (7) in the hierarchical level associated with the selected path element (8-1, 8-2, 8-3) is displayed.

6. Method according to one of the preceding claims,
**characterized in that**
- a subset containing objects (7) of an xth hierarchical level is displayed,
- a first object (7) of the xth hierarchical level is then selected,
- at least one subset of the objects (7) of the next lower, (x+1)th hierarchical level is then displayed, wherein the displayed objects (7) are associated with the selected first object (7), and an nth path element (8-3) associated with the xth hierarchical level is added to the displayed path (8),
- if the nth path element (8-3) is selected, the subset containing objects (7) of the xth hierarchical level is displayed, wherein the first, previously selected object (7) is displayed in a marked manner.

7. Method according to one of the preceding claims, **characterized**
**in that** graphical symbols for visualizing the hierarchical level of the path element (8-1, 8-2, 8-3) are respectively displayed in the path elements (8-1, 8-2, 8-3).

## Revendications

1. Procédé de commande de l'affichage d'informations sur une surface d'affichage (5), les informations étant structurées hiérarchiquement en objets (7), selon lequel
- un objet (7) et
- un chemin (8) qui mène jusqu'à l'objet (7) dans la structure hiérarchique sont affichés, le chemin (8) étant divisé en éléments de chemin (8-1, 8-2, 8-3) individuels, les éléments de chemin (8-1, 8-2, 8-3) appartenant à des niveaux hiérarchiques différents du chemin (8) qui mène jusqu'à l'objet (7),
**caractérisé en ce que**
- les éléments de chemin (8-1, 8-2, 8-3) sont des boutons sélectionnables,
- lors d'une sélection d'un élément de chemin (8-1, 8-2, 8-3), l'affichage d'informations saute dans le niveau hiérarchique de l'élément de chemin (8-1, 8-2, 8-3) sélectionné et
- les éléments de chemin (8-1, 8-2, 8-3) individuels sont affichés les uns à côté des autres sur une barre.

2. Procédé selon la revendication 1, **caractérisé en ce qu'**après une sélection d'un objet (7), au moins une quantité partielle des objets (7) du niveau hiérarchique plus bas suivant, auquel sont associés les objets (7) sélectionnés, est affichée et un élément de chemin (8-1, 8-2, 8-3) qui est associé au niveau hiérarchique de l'objet (7) sélectionné est ajouté au chemin (8) affiché.

3. Procédé selon la revendication 1 ou 2, **caractérisé en ce que** le nombre d'éléments de chemin (8-1, 8-2, 8-3) affichés qui sont affichés en association avec l'objet (7) affiché dépend du nombre d'étapes qui ont été nécessaires pour parvenir jusqu'à l'objet (7).

4. Procédé selon la revendication 1 ou 2, **caractérisé en ce que** le nombre d'éléments de chemin (8-1, 8-2, 8-3) affichés dépend de la profondeur du niveau hiérarchique de l'objet (7) affiché.

5. Procédé selon l'une des revendications précédentes, **caractérisé en ce qu'**après une sélection d'un élément de chemin (8-1, 8-2, 8-3), au moins une quantité partielle des objets (7) est affichée dans le niveau hiérarchique qui est associé à l'élément de chemin (8-1, 8-2, 8-3) sélectionné.

6. Procédé selon l'une des revendications précédentes, **caractérisé en ce que**
- une quantité partielle d'objets (7) d'un x-ième niveau hiérarchique est affichée,
- un premier objet (7) du x-ième niveau hiérarchique est ensuite sélectionné,
- au moins une quantité partielle des objets (7) du niveau hiérarchique plus bas suivant, le (x+1)-ième, est ensuite affichée, les objets (7) affichés étant associés au premier objet (7) sélectionné et un n-ième élément de chemin (8-3), qui est associé au x-ième niveau hiérarchique, étant ajouté au chemin (8) affiché,
- lorsque le n-ième élément de chemin (8-3) est sélectionné, la quantité partielle d'objets (7) du x-ième niveau hiérarchique est affichée, le premier objet (7), sélectionné précédemment, étant affiché marqué.

7. Procédé selon l'une des revendications précédentes, **caractérisé en ce que** des symboles graphiques destinés à visualiser le niveau hiérarchique de l'élément de chemin (8-1, 8-2, 8-3) sont respectivement affichés dans les éléments de chemin (8-1, 8-2, 8-3).
